Europäisches Patentamt

European Patent Office

Office européen des brevets

(11) Publication number: **0 117 085**
A2

# EUROPEAN PATENT APPLICATION

(21) Application number: **84300584.4**

(22) Date of filing: **30.01.84**

(51) Int. Cl.³: **B 29 C 3/00**
**B 29 H 9/00, C 08 J 5/12**
**B 32 B 31/20**

(30) Priority: **22.02.83 GB 8304902**

(43) Date of publication of application:
**29.08.84 Bulletin 84/35**

(84) Designated Contracting States:
**DE FR GB IT**

(71) Applicant: **IMPERIAL CHEMICAL INDUSTRIES PLC**
Imperial Chemical House Millbank
London SW1P 3JF(GB)

(72) Inventor: **Boulton, Thomas Wesley**
37 Howey Rise
Frodsham Cheshire(GB)

(74) Representative: **Walmsley, David Arthur Gregson et al,**
Imperial Chemical Industries PLC Legal department:
Patents PO Box 6
Welwyn Garden City Herts, AL7 1HD(GB)

(54) Production of shaped article.

(57) A method of bonding a layer of a fluoropolymeric material to the surface of an article of an organic polymeric material, in which the organic polymeric material is contacted with an expanded low density form of the fluoropolymeric material, and the fluoropolymeric material and the organic polymeric material are subjected to elevated temperature and pressure. The shaped article may be in the form of a gasket which may be used in an electrolytic cell. The layer of fluoropolymeric material provides corrosion resistance to the shaped article.

EP 0 117 085 A2

QM 32609 /EP

## PRODUCTION OF SHAPED ARTICLE

This invention relates to the production of a shaped article of an organic polymeric material, particularly to the production of a shaped article in the form of a gasket for use in an electrolytic cell, and to an electrolytic cell containing the gasket.

Electrolytic cells are known which comprise an anode or a plurality of anodes, and a cathode or plurality of cathodes, with each anode being separated from the adjacent cathode by a separator, which may be a microporous diaphragm or an ion-exchange membrane, which divides the cell into separate anode and cathode compartments. The anode compartments of such a cell are provided with means for feeding electrolyte to the cell, suitably from a common header, and with means for removing products of electrolysis from the cell. Similarly, the cathode compartments of the cell are provided with means for removing products of electrolysis from the cell, and optionally with means for feeding water or other fluid to the cell.

Such electrolytic cells may be of the so-called tank type comprising for example a cathode box having a plurality of foraminate cathode fingers with an anode positioned in the gap between adjacent cathode fingers.

The electrolytic cell may be of the filter press type comprising a large number of alternating anodes and cathodes, for example, fifty anodes alternating with fifty cathodes, although the cell may comprise even more anodes and cathodes, for example up to one hundred and fifty alternating anodes and cathodes.

-2-

Electrolytic cells of the aforementioned types are used on a large scale for the production of chlorine and caustic alkali by the electrolysis of aqueous alkali metal chloride solution. Such electrolytic cells are commonly referred to as chlor-alkali cells.

In such an electrolytic cell the separator may be an electrolyte-permeable microporous diaphragm. Where aqueous alkali metal chloride solution is electrolysed in a cell containing a diaphragm the solution is charged to the anode compartments of the cell and chlorine produced in the electrolysis is removed therefrom, the solution passes through the diaphragm to the cathode compartments of the cell and hydrogen and aqueous alkali metal hydroxide solution produced by electrolysis are removed therefrom.

In an electrolytic cell containing an essentially hydraulically impermeable ion-exchange membrane aqueous alkali metal chloride solution is charged to the anode compartments of the cell and chlorine produced in the electrolysis and depleted alkali metal chloride solution are removed from the anode compartments, alkali metal ions are transported across the membranes to the cathode compartments of the cell to which water or dilute aqueous alkali metal hydroxide solution may be charged, and hydrogen and alkali metal hydroxide solution produced by the reaction of alkali metal ions with hydroxyl ions are removed from the cathode compartments of the cell.

Electrolytic cells of the types described are also fitted with gaskets of an electrically insulating material positioned so as to electrically insulate the anodes from the cathodes. These gaskets are frequently made of an organic polymeric material, and in general they are made of an elastomeric material.

Such gaskets suffer from disadvantages in that the environment in electrolytic cells is frequently corrosive and the gaskets tend to corrode, that is they are chemically attacked, with the result that eventually leakages may occur in the cells.

This is a particular problem in electrolytic cells in which aqueous alkali metal chloride solution is electrolysed, and in particular it is a problem with those gaskets which come into contact with the electrolyte, that is chlorine-containing aqueous alkali metal chloride solution, and with the wet chlorine in the anode compartments of such cells.

The problem of corrosion of gaskets in electrolytic cells is a problem which has been recognised in the art. It is known that fluoropolymeric materials, in particular polytetrafluoroethylene, are resistant to corrosive chemicals, and it is possible to employ gaskets made of such materials in electrolytic cells. However, such materials are expensive and if used in an electrolytic cell the cost of the gaskets becomes a very substantial proportion of the total cost of the electrolytic cell.

It has also been proposed in US Patent 4344633 to employ in an electrolytic cell of the membrane type a so-called multi-layer gasket which comprises an outboard layer of a material having a Type A Shore Scale Durometer Hardness (ASTM Specification No. D-2240-75) of about 40 to 70 and a Compression Set (ASTM Specification D-395-69-Method A) of zero plus to about 40 per cent and an inboard barrier layer of a material which is corrosion resistant, non-contaminating and stable upon contact with chlor-alkali cell electrolyte. The barrier layer may be a polytetrafluoroethylene strip positioned on the membrane facing side of the anode frame of the electrolytic cell and positioned between the electrolyte and the gasket so as to prevent contact between the gasket and the electrolyte.

The inboard barrier layer may be a rope or strip of polytetrafluoroethylene of the type sold under the tradename "Gore-Tex", and the barrier layer may be separated from or in contact with the gasket. There is no suggestion in the US patent of the polytetrafluoroethylene barrier layer being bonded to the gasket.

In US patent 4332661 an electrolytic cell is described in which a lubricious material is positioned between a gasket and the adjacent surface of a membrane so that during assembly of the cell the gasket may deform in relation to the membrane and so avoid tearing or otherwise damaging the membrane. The lubricious material may be a thin strip of polytetrafluoroethylene.

In the aforementioned patent there is no suggestion that the strip of lubricious material is bonded to the gasket. Indeed, in order that the strip of lubricious material may permit the gasket to deform during assembly of the electrolytic cell the gasket must be capable of deforming "slidably" against the strip of lubricious material. Furthermore, the strip of lubricious material is not placed in such a position in contact with the gasket as to prevent corrosive liquors from contacting the gasket in the electrolytic cell.

In order to protect a gasket in an electrolytic cell from corrosion by the corrosive liquors with which the gasket may come into contact the gasket, or at least certain parts of the gasket, may have a layer of a corrosion resistant material bonded thereto. Suitable corrosion resistant materials for use in electrolytic cells, and particulary in chlor-alkali cells, are fluoropolymeric materials, particularly polytetrafluoroethylene. However, such materials are well-known for their resistance to bonding. Indeed, in order to bond a strip of polytetrafluoroethylene to an article of organic polymeric material it is necessary first to etch the surface of the polytetrafluoroethylene and then to use an adhesive in order to effect the bonding.

The present invention relates to a simple and readily effected method of bonding a layer of a fluoro-polymeric material to another organic polymeric material which method does not depend on the use of such an etching step.

According to the present invention there is provided a method of bonding a layer of a fluoro-polymeric material to the surface of an article of an organic polymeric material characterised in that the organic polymeric material is contacted with an expanded low density form of the fluoropolymeric material and in that the fluoropolymeric material and the organic polymeric material are subjected to elevated temperature and pressure.

The method of the invention is not limited to use in the production of gaskets for electrolytic cells. The method may be used to bond a layer of a fluoropolymeric material to any shaped article of an organic polymeric material where it is desired to impart corrosion resistance to the article. However, it finds particular applicability in bonding a layer of a fluoropolymeric material to a gasket of an organic polymeric material, and the method will be described hereafter with reference to a gasket, particularly a gasket for use in an electrolytic cell, e.g. a chlor-alkali cell.

The method of the invention may be operated in such a way as to apply a layer of fluoropolymeric material to the whole surface of the gasket. However, in general this will not be necessary as the whole surface of the gasket will not in use come into contact with corrosive liquors. Thus, it is preferred to apply a layer of fluoropolymeric material only to those surfaces of the gasket which in the electrolytic cell come into contact with corrosive liquors. Some benefit will be obtained even if a part only of the surface of the gasket which comes into contact with corrosive liquors has a layer of fluoropolymeric material applied thereto.

The method of the invention may be operated with a preformed gasket. Thus, a preformed gasket of an organic polymeric material may be contacted with an expanded, low density fluoropolymeric material and the fluoropolymeric material and the organic polymeric material subjected to elevated temperature and pressure in order to produce a layer of fluoropolymeric material on the surface of the gasket. Contact of the fluoro-polymeric material with the gasket, and the application of elevated temperature and pressure, may be effected in a suitably shaped mould.

Alternatively, in a preferred embodiment, the method of the invention may be combined with a process in which the gasket itself is produced. For example, an expanded, low density fluoropolymeric material may be placed in a suitably shaped mould and the organic polymeric material may be charged to the mould and contacted with the fluoropolymeric material and shaped at elevated temperature and pressure.

The method of the invention is suitably combined with an injection moulding process or a compression moulding process for the production of the gasket.

In operating the method of the invention the expanded, low density fluoropolymeric material is suitably in the form of a rope or strip, and the material is charged at least to those parts of the mould which will result in the material contacting and becoming bonded to at least those parts of the surface of the gasket which it is desired to coat with fluoro-polymeric material. Under the influence of elevated temperature and pressure the expanded, low density fluoropolymeric material flows in the mould and assumes the contours of the mould and is converted into a thin layer bonded to the surface of the gasket.

The organic polymeric material of the gasket, which is of course different from the fluoropolymeric material, may be a thermoplastic material or a thermosetting material. It is preferred that the organic polymeric material is an injection-mouldable thermoplastic material as such materials are readily shaped and formed into gaskets. For example, the organic polymeric material may be polyethylene, polypropylene, polyvinyl chloride, or an acrylonitrile-butadienestyrene polymeric material.

In electrolytic cells it is preferred, in order to assist sealing of the gasket in a leak-tight manner to other parts of the cell, e.g. to the anodes and cathodes, that the gasket is made of a resiliently compressible material, that is of an elastomer. For example, the elastomer may be a neoprene rubber, or styrene-butadiene rubber, a natural rubber, or an ethylene-propylene rubber or ethylene-propylene-diene rubber. In the preferred embodiment of the invention in which the method is combined with a process in which the gasket itself is produced, an uncured elastomer composition containing suitable curing addivities may be charged to a mould containing the expanded, low density fluoropolymeric material, and the elastomer composition may be shaped and cured at elevated temperature and pressure in the mould.

The fluoropolymeric material should be resistant to corrosion by the liquors in the electrolytic cell in which the gasket is to be used, and the choice of fluoropolymeric material will depend on the nature of the electrolyte and on the products of electrolysis. The fluoropolymeric material may be, for example, polyvinyl fluoride, polyvinyidene fluoride, a fluorinated ethylene-propylene copolymer, or poly(tetrafluoro-ethylenehexafluoropropylene). A preferred fluoro-polymeric material, on account of its resistance to corrosion by a wide variety of chemicals, is polytetra-fluoroethylene. The fluoropolymeric material, and particularly polytetrafluoroethylene, is preferably used in an unsintered form.

The fluoropolymeric material is used in the method of the invention in an expanded low density form. The material may be a low density porous material, and it may be in the form of a low density fibrillated material. A particularly preferred expanded low density fluoro-polymeric material is a form produced by stretching a polytetrafluoroethylene article, e.g. a strip or cylinder, and sold under the trade name "Gore-Tex". The production of such preferred materials, which comprises a micro structure of nodes interconnected by fibrils, is described for example in British Patent 1355373. Thus, a shaped article of polytetrafluoro-ethylene and a lubricant may be formed by extrusion, the lubricant removed from the article, and the article stretched at elevated temperature and at a rate exceeding 10% per second of its original length. A suitable elevated temperature is in the range from 35°C to less than 327°C. The rate of stretching may be far in excess of 10% per second of the original length of the article; for example it may be 10000% per second of the original length of the article or more. The polytetra-fluoroethylene may subsequently be sintered by heating at a temperature above the crystalline melting point of the polytetrafluoroethylene although this is not preferred.

In operating the method of the invention the elevated temperature and pressure used should be such as to convert the expanded low density fluoropolymeric material into the form of a thin layer on the surface of the gasket. Suitable elevated temperatures and pressures may be determined by simple experiment, and will depend in part on the nature of the fluoropolymeric material. In general the temperature will be in excess of 100°C but it should not be so high as to result in degradation of the organic polymeric material of the gasket. An upper limit on the temperature will generally be 250°C, preferably 200°C.

A suitable elevated pressure may be determined by simple experiment. In general it will be necessary to use a lower pressure the greater is the temperature at which the method is effected. A suitable elevated pressure to use is in general a pressure which is about the same as that used in shaping the organic polymeric material.

In order to assist bonding of the fluoro-polymeric material to the surface of the gasket it may be advantageous to use an adhesive, for example a layer of adhesive on that part of the surface of the fluoro-polymeric material which contacts the gasket.

In a further embodiment of the invention there is provided a shaped article, e.g. a gasket, of an organic polymeric material having a layer of a fluoropolymeric material bonded to at least a part of the surface thereof and produced by the method described, and an electrolytic cell comprising an anode and cathode and a gasket of an organic polymeric material having a layer of a fluoropolymeric material bonded to the surface thereof produced by the method described.

The electrolytic cell may be of the flowing mercury cathode type, or of the diaphragm type in which adjacent anodes and cathodes are separated by a hydraulically permeable diaphragm, or of the membrane type in which adjacent anodes and cathodes are separated by a substantially hydraulically impermeable cation-exchange membrane.

Anodes, cathodes, diaphragms and membranes for use in such cells are well-known in the art.

The invention is now illustrated by the following example.

Example

This example describes the production of a gasket having a picture-frame shape which is suitable for use in a chlor-alkali cell, and the bonding of a layer of polytetrafluoroethylene to the inner surface of the picture-frame shape.

A steel mould having a shape suitable for moulding of a gasket into a picture-frame shape and having a width of 2 cm and a thickness of 0.4 cm was used. A 0.5 cm diameter rope of expanded, low density polytetra-fluoroethylene sold under the trade name "Gore-Tex" was positioned in the mould around the inner periphery of the mould, that is around the 0.4 cm dimension wall of the mould, and an uncurred EPDM elastomer composition containing sulphur and conventional curing additives was charged to the mould.

The mould and contents were heated at a temperature of 170°C for 15 minutes under an applied pressure of 200 kg/cm$^2$, the pressure was released, and the mould was allowed to cool.

The gasket removed from the mould was found to have a thin layer of polytetrafluoroethylene firmly bonded to the inner periphery of the gasket and to the walls of the gasket adjacent to the inner periphery.

The gasket was installed in an electrolytic cell equipped with a titanium anode coated with a mixture of $RuO_2$ and $TiO_2$, a nickel cathode, and an ion-exchange membrane of a copolymer of tetrafluoroethylene and a perfluoro-vinyl ether containing carboxylic and acid groups ("Flemion", Asahi Glass Co Ltd). The gasket was positioned between the anode and the membrane and served to define the anode compartment of the cell.

Aqueous sodium chloride solution was charged to the anode compartment and water to the cathode compartment and electrolysis was carried out at a current density of $2kA/m^2$, chlorine and spent sodium chloride solution being removed from the anode compartment and hydrogen and aqueous sodium hydroxide solution from the cathode compartment.

After 90 days electrolysis the electrolytic cell was dismantled. There was no visible corrosion of the gasket.

-12-

By way of comparison when the above procedure was repeated except that the gasket installed as a part of the anode compartment did not have a layer of polytetra-fluoroethylene bonded thereto the inner surface of the gasket which had been in contact with the liquors in the anode compartment of the cell was found to be white in colour and visibly corroded after 90 days electrolysis.

CLAIMS

1.      A method of bonding a layer of a fluoropolymeric material to the surface of an article of an organic polymeric material, characterised in that the organic polymeric material is contacted with an expanded low density form of the fluoropolymeric material and in that the fluoropolymeric material and the organic polymeric material are subjected to elevated temperature and pressure.

2.      A method as claimed in Claim 1 characterised in that a layer of fluoropolymeric material is bonded to a part only of a surface of an article of an organic polymeric material.

3.      A method as claimed in Claim 1 or Claim 2 characterised in that the fluoropolymeric material is contacted with a preform shaped article or an organic polymeric material.

4.      A method as claimed in Claim 1 or Claim 2 characterised in that the fluoropolymeric material is contacted with an organic polymeric material in a mould and in that the organic polymeric material is shaped in the mould.

5.      A method as claimed in any one of Claims 1 to 4 characterised in that the fluoropolymeric material which is used is in the form of a rope or strip.

6.      A method as claimed in any one of Claims 1 to 5 characterised in that the organic polymeric material is an elastomeric material.

7.      A method as claimed in Claim 6 characterised in that the organic polymeric material is an ethylene-propylene-diene elastomer.

8. A method as claimed in Claim 6 or Claim 7 characterised in that the elastomeric material is shaped in a mould and is cured by heating at elevated temperature and pressure.

9. A method as claimed in any one of Claims 1 to 8 characterised in that the fluoropolymeric material is polytetrafluoroethylene.

10. A method as claimed in Claim 9 characterised in that the polytetrafluoroethylene is a fibrillated material.

11. A method as claimed in Claim 10 characterised in that the polytetrafluoroethylene has a microstructure of nodes interconnected by fibrils.

12. A method as claimed in any one of Claims 1 to 11 characterised in that the elevated temperature is a temperature in excess of 100°C.

13. A shaped article of an organic polymeric material having a layer of a fluoropolymeric material bonded to at least a part of the surface thereof and produced by a method as claimed in any one of Claims 1 to 12.

14. A shaped article as claimed in Claim 13 which is in the form of a gasket.

15. An electrolytic cell comprising an anode and a cathode and a gasket as claimed in Claim 14.